# EUROPÄISCHE PATENTANMELDUNG

(11) **EP 1 557 135 A1**
(43) Veröffentlichungstag der Anmeldung: **27.07.2005**
(21) Anmeldenummer: 05001067.7
(22) Anmeldetag: 20.01.2005
(51) Int. Cl.: A61C 7/10

(54) **Kieferorthopädische Mehrsektoren-Dehnschraube**

(30) Priorität: 20.01.2004 DE 102004004021
(71) Anmelder: DENTAURUM J.P. WINKELSTROETER KG, 75228 Ispringen (DE)
(72) Erfinder: Ehrenberger, Walter, 75236 Kämpfelbach-Ersingen (DE)
(74) Vertreter: HOEGER, STELLRECHT & PARTNER Patentanwälte

(57) **Zusammenfassung**

Die Erfindung betrifft eine Mehrsektoren-Dehnschraube für kieferorthopädische Plattenapparaturen zur transversalen und sagittalen Dehnung des Kiefers, mit einem ersten Dehnschraubenteil zur transversalen und einem zweiten Dehnschraubenteil zur sagittalen Kieferdehnung, wobei die beiden Dehnschraubenteile jeweils mindestens ein Führungselement aufweisen, an dem zumindest ein mit einer drehbaren Spindel zusammenwirkender Dehnschraubenkörper verschiebbar geführt ist. Um die Dehnschraube derart weiterzubilden, daß sie an die individuellen Kieferverhältnisse besser anpassbar ist, wird erfindungsgemäß vorgeschlagen, daß die beiden Dehnschraubenteile über mindestens ein Gelenk miteinander verbunden sind, wobei der erste Dehnschraubenteil unabhängig von der relativen Lage der Dehnschraubenkörper zueinander um mindestens eine Schwenkachse schwenkbar und in einer eingenommenen Schwenkstellung relativ zum zweiten Dehnschraubenteil festlegbar ist.

## Beschreibung

Die Erfindung betrifft eine Mehrsektoren-Dehnschraube für kieferorthopädische Plattenapparaturen zur transversalen und sagittalen Dehnung des Kiefers, mit einem ersten Dehnschraubenteil zur transversalen und einem zweiten Dehnschraubenteil zur sagittalen Kieferdehnung, wobei die beiden Dehnschraubenteile jeweils mindestens ein Führungselement aufweisen, an dem zumindest ein mit einer drehbaren Spindel zusammenwirkender Dehnschraubenkörper verschiebbar geführt ist.

Derartige Mehrsektoren-Dehnschrauben kommen zur transversalen und sagittalen Erweiterung, d. h. Dehnung, des Oberkiefers und auch des Unterkiefers zum Einsatz sowie zur Protrusion einzelner oder mehrerer Zähne. Hierzu können die Dehnschraubenkörper, die durch Drehung der Spindel entlang des Führungselementes verschoben werden können, in eine kieferorthopädische Plattenapparatur eingegossen werden, die eine aus Kunststoff gefertigte Kieferdehnvorrichtung ausbildet. Die Dehnschraubenkörper wirken dabei mit plattenförmigen Bauteilen der Plattenapparatur zusammen, die der inneren Kontur des Kiefers angepaßt sind und mittels der Mehrsektoren-Dehnschraube zur Erweiterung des Kiefers ausspreizbar sind. Eine Mehrsektoren-Dehnschraube der eingangs genannten Art ist aus der DE 32 41 105 A1 bekannt.

Aufgabe der vorliegenden Erfindung ist es, eine Mehrsektoren-Dehnschraube der gattungsgemäßen Art derart weiterzubilden, daß sie an die individuellen Kieferverhältnisse besser anpassbar ist.

Diese Aufgabe wird bei einer Mehrsektoren-Dehnschraube der eingangs genannten Art erfindungsgemäß dadurch gelöst, daß die beiden Dehnschraubenteile über mindestens ein Gelenk miteinander verbunden sind, wobei der erste Dehnschraubenteil unabhängig von der relativen Lage der Dehnschraubenkörper zueinander um mindestens eine Schwenkachse schwenkbar und in einer eingenommenen Schwenkstellung relativ zum zweiten Dehnschraubenteil festlegbar ist.

Bei der erfindungsgemäßen Mehrsektoren-Dehnschraube können die beiden Dehnschraubenteile relativ zu einander einstellbar abgewinkelt, d. h. geschwenkt werden, so daß sie an die individuellen Kieferverhältnisse angepaßt werden können. Die Akzeptanz der kieferorthopädischen Plattenapparatur einschließlich der erfindungsgemäßen Mehrsektoren-Dehnschraube kann daher für eine transversale und sagittale Erweiterung des Kiefers für einen Patienten erheblich gesteigert werden, denn die Schwenkbarkeit der beiden Dehnschraubenteile ermöglicht es, die Mehrsektoren-Dehnschraube ebenso wie die zugeordnete Plattenapparatur mit einer geringen Bauhöhe auszustatten. Die Mehrsektoren-Dehnschraube hat außerdem den Vorteil, daß die Schwenkbarkeit der beiden Dehnschraubenteile nicht durch die relative Stellung der Dehnschraubenkörper zueinander beeinträchtigt wird. Dies gibt die Möglichkeit, eine transversale Dehnung vorzunehmen, ohne daß hiervon die sagittale Dehnung oder Protrusion beeinflußt wird.

Vorzugsweise ist die Spindel gegen eine Verschiebung in axialer Richtung, d. h. in ihrer Längsrichtung gesichert.

Eine besonders gute Anpassbarkeit an die jeweiligen Kieferverhältnisse kann bei einer bevorzugten Ausführungsform dadurch erzielt werden, daß die beiden Dehnschraubenteile durch zwei Gelenke miteinander verbunden sind, die jeweils eine Schwenkachse definieren.

Zur Festlegung der Dehnschraubenteile in einer gewünschten Schwenkstellung ist es günstig, wenn das mindestens eine Gelenk zumindest eine Öffnung aufweist zur Aufnahme von Füllstoff, beispielsweise Kunststoff, beim Eingießen der Mehrsektoren-Dehnschraube in die Plattenapparatur. Beim Eingießen der Mehrsektoren-Dehnschraube kann somit Füllstoff in die Öffnung des Gelenkes eintreten und dort aushärten, so daß dann die beiden Dehnschraubenteile relativ zueinander arretiert sind und folglich die beim Anpassen der Mehrsektoren-Dehnschraube an die individuellen Kieferverhältnisse eingenommene Schwenkstellung nicht mehr ungewollt verändert werden kann.

Bei einer bevorzugten Ausführungsform ist vorgesehen, daß das mindestens eine Gelenk ein Gelenkstück und einen ersten Gelenkstift umfaßt, wobei das Gelenkstück mit dem zweiten Dehnschraubenteil verbunden ist und der mindestens eine Dehnschraubenkörper des ersten Dehnschraubenteils verschiebbar am ersten Gelenkstift gehalten ist, und wobei der Dehnschraubenkörper und/oder das Gelenkstück eine erste Gelenkbohrung aufweisen, die vom ersten Gelenkstift durchgriffen ist, wobei der erste Gelenkstift in der ersten Gelenkbohrung um seine Längsachse drehbar ist und im Bereich der ersten Gelenkbohrung zwischen deren Wandung und dem ersten Gelenkstift ein Freiraum vorgesehen ist zur Aufnahme von Füllstoff beim Eingießen der Mehrsektoren-Dehnschraube in die Plattenapparatur. Unter Zwischenschaltung des Gelenkstückes und des ersten Gelenkstiftes können somit die beiden Dehnschraubenteile um die Längsachse des ersten Gelenkstiftes, die eine Schwenkachse der Mehrsektoren-Dehnschraube ausbildet, relativ zueinander verschwenkt werden. Der erste Gelenkstift ist hierzu drehbar in der ersten Gelenkbohrung gehalten. Zur Festlegung der Schwenkstellung der beiden Dehnschraubenteile ist zwischen der Wandung der ersten Gelenkbohrung und dem ersten Gelenkstift ein Freiraum vorgesehen, in den beim Eingießen der Mehrsektoren-Dehnschraube in die Plattenapparatur Füllstoff eintreten kann. Der zunächst fließfähige Füllstoff kann anschließend aushärten und den ersten Gelenkstift in der ersten Gelenkbohrung arretieren, so daß dieser dann in der ersten Gelenkbohrung drehfest gehalten ist.

Von Vorteil ist es hierbei, wenn der erste Gelenkstift drehfest in einer Aufnahmebohrung des Gelenkstücks gehalten ist und der mindestens eine Dehnschraubenkörper des ersten Dehnschraubenteils die Gelenkbohrung aufweist und verschwenkbar am Gelenkstift gehalten ist. Im Gegensatz zum Dehnschraubenkörper ist somit das Gelenkstück drehfest mit dem ersten Gelenkstift verbunden, der wiederum den mindestens einen Dehnschraubenkörper des ersten Dehnschraubenteils schwenkbar lagert.

Zur Ausbildung eines Freiraums zwischen dem ersten Gelenkstift und der ersten Gelenkbohrung ist es günstig, wenn der erste Gelenkstift zumindest im Bereich der ersten Gelenkbohrung profiliert ist, zum Beispiel seitlich abgeflacht ist. Im Bereich der Profilierung bildet sich somit zwischen dem ersten Gelenkstift und der zylindersymmetrisch ausgebildeten ersten Gelenkbohrung ein Freiraum aus, der beim Eingießen der Mehrsektoren-Dehnschraube in die Plattenapparatur Füllstoff aufnehmen kann.

Von besonderem Vorteil ist es, wenn in den Freiraum eine Querbohrung einmündet. Dies gibt die zusätzliche Möglichkeit, über die Querbohrung Füllstoff in den Bereich zwischen dem ersten Gelenkstift und die Wandung der ersten Gelenkbohrung einzubringen.

Es kann vorgesehen sein, daß der erste Dehnschraubenteil zwei Dehnschraubenkörper aufweist, die durch Drehung zumindest einer Spindel in ihrem gegenseitigen Abstand veränderbar sind.

Günstig ist es hierbei, wenn die beiden Dehnschraubenkörper am ersten Gelenkstift gehalten sind, wobei das Gelenkstück zwischen den beiden Dehnschraubenkörpern angeordnet ist. Die beiden Dehnschraubenkörper können somit seitlich an das Gelenkstück angelegt werden und können durch Drehung der Spindel in Abstand zum Gelenkstück gebracht werden.

Vorzugsweise ist die mindestens eine Spindel des ersten Dehnschraubenteils in axialer Richtung unverschieblich am Gelenkstück gehalten. Das Gelenkstück dient somit nicht nur der Aufnahme des ersten Gelenkstiftes, sondern es übernimmt zusätzlich die Funktion, die mindestens eine Spindel des ersten Dehnschraubenteils in axialer Richtung zu sichern, so daß die Spindel lediglich um ihre Längsachse gedreht, nicht jedoch entlang ihrer Längsachse verschoben werden kann.

Zur axialen Sicherung der mindestens einen Spindel ist es günstig, wenn das Gelenkstück eine Aufnahme aufweist, in die ein Kopfteil der Spindel eintaucht.

Es kann vorgesehen sein, daß der erste Dehnschraubenteil zwei separat ausgestaltete Spindeln aufweist, die jeweils mit einem Dehnschraubenkörper zusammenwirken. Dies gibt die Möglichkeit, bei einer transversalen Dehnung des Kiefers die beiden Dehnschraubenkörper des ersten Dehnschraubenteils unabhängig voneinander zu bewegen.

Alternativ kann vorgesehen sein, daß der erste Dehnschraubenteil eine einzige Spindel aufweist mit einem Kopfteil und mit zwei Spindelteilen, die jeweils mit einem Dehnschraubenkörper zusammenwirken. Ein erstes Spindelteil weist hierbei ein Rechtsgewinde auf, während das zweite Spindelteil mit einem Linksgewinde versehen ist, so daß die mit den jeweiligen Spindelteilen zusammenwirkenden Dehnschraubenkörper durch Drehung der Spindel in Abstand zueinander gebracht werden können. Bei Einsatz einer derartigen Spindel ist es von Vorteil, wenn ihr Kopfteil zur axialen Sicherung in eine Aufnahme des Gelenkstückes eintaucht.

Bei einer besonders bevorzugten Ausführungsform der erfindungsgemäßen Mehrsektoren-Dehnschraube weist der erste Dehnschraubenteil ein Halteteil auf, das relativ zum Gelenkstück unverschiebbar, jedoch um die Schwenkachse der Mehrsektoren-Dehnschraube schwenkbar gehalten ist und an dem das Kopfteil der mindestens einen Spindel des ersten Dehnschraubenteils in axialer Richtung unverschieblich gehalten ist. Bei einer derartigen Ausgestaltung übernimmt das Gelenkstück die Halterung des ersten Gelenkstiftes, während die axiale Sicherung der mindestens einen Spindel durch Einsatz des Halteteiles gewährleistet ist, das relativ zum Gelenkstück unverschiebbar ist, das jedoch um die Schwenkachse geschwenkt werden kann.

Umfaßt der erste Dehnschraubenteil zwei jeweils ein Kopfteil und ein Spindelteil aufweisende Spindeln, so ist es günstig, wenn die Kopfteile der Spindeln jeweils axial unverschieblich am Halteteil gehalten sind und die Spindelteile jeweils mit einem seitlich am Halteteil angeordneten Dehnschraubenkörper zusammenwirken. Das Halteteil ist somit zwischen den beiden Dehnschraubenkörpern positioniert.

Zur unverschieblichen Festlegung des Halteteils am Gelenkstück ist es von Vorteil, wenn das Halteteil eine Aufnahme umfaßt, in die das Gelenkstück eintaucht. So kann beispielsweise vorgesehen sein, daß das Halteteil im wesentlichen U-förmig ausgestaltet ist und zwei Schenkel aufweist, die über einen Steg miteinander verbunden sind, wobei das Gelenkstück zwischen die beiden Schenkel eintaucht. Als günstig hat es sich hierbei erwiesen, wenn die beiden Schenkel im Bereich ihrer freien Enden jeweils eine Gelenkbohrung aufweisen, die fluchtend zueinander und fluchtend zu den Gelenkbohrungen der Dehnschraubenkörper des ersten Dehnschraubenteiles ausgerichtet sind, wobei der Gelenkstift die Gelenkbohrungen der Schenkel und der Dehnschraubenkörper durchgreift und drehfest in einer fluchtend zu den Gelenkbohrungen ausgerichteten Aufnahmebohrung des Gelenkstückes gehalten ist.

Sofern bei der erfindungsgemäßen Mehrsektoren-Dehnschraube nur ein Gelenk zum Einsatz kommt, ist es von Vorteil, wenn das Gelenkstück starr am zweiten Dehnschraubenteil gehalten ist. So kann beispielsweise vorgesehen sein, daß das Gelenkstück einstückig mit einem Grundkörper des zweiten Dehnschraubenteils verbunden ist.

Der Grundkörper des zweiten Dehnschraubenteils ist vorzugsweise im wesentlich U-förmig ausgestaltet und weist zwei Schenkel auf, die jeweils ein Führungselement für den Dehnschraubenkörper des zweiten Dehnschraubenteils ausbilden und zwischen sich die Spindel des zweiten Dehnschraubenteils aufnehmen, sowie einen die beiden Schenkel miteinander verbindenden Steg. Der Steg kann hierbei einstückig mit dem Gelenkstück verbunden sein, das mit dem ersten Gelenkstift zusammenwirkt.

Kommen bei der erfindungsgemäßen Mehrsektoren-Dehnschraube zwei Gelenke zum Einsatz, die jeweils eine Schwenkachse für die Dehnschraubenteile definieren, so ist es von Vorteil, wenn das Gelenkstück schwenkbar am zweiten Dehnschraubenteil gehalten ist.

Bei einer vorteilhaften Ausführungsform ist das Gelenkstück über einen zweiten Gelenkstift mit dem Grundkörper des zweiten Dehnschraubenteils verbunden, wobei das Gelenkstück und/oder der Grundkörper eine Gelenkbohrung aufweisen, die vom zweiten Gelenkstift durchgriffen ist, und wobei der zweite Gelenkstift in der zweiten Gelenkbohrung um seine Längsachse drehbar ist und im Bereich der zweiten Gelenkbohrung zwischen deren Wandung und dem zweiten Gelenkstift ein Freiraum vorgesehen ist zur Aufnahme von Füllstoff beim Eingiessen der Mehrsektoren-Dehnschraube in die Plattenapparatur. Durch das Einbringen von Füllstoff in den Freiraum zwischen dem zweiten Gelenkstift und der zugeordneten Gelenkbohrung kann somit der zweite Dehnschraubenteil relativ zum Gelenkstück arretiert werden, nachdem dessen Ausrichtung zuvor an die individuellen Kieferverhältnisse des jeweiligen Patienten angepaßt wurde.

Vorzugsweise ist der zweite Gelenkstift drehfest in einer zweiten Aufnahmebohrung des Gelenkstücks gehalten, und der Grundkörper des zweiten Dehnschraubenteils umfaßt zumindest eine zweite Gelenkbohrung und ist schwenkbar am zweiten Gelenkstift gehalten.

Zur Ausbildung eines Freiraumes zwischen dem zweiten Gelenkstift und der Wandung der zugeordneten zweiten Gelenkbohrung ist es günstig, wenn der zweite Gelenkstift zumindest im Bereich der zweiten Gelenkbohrung seitlich profiliert, zum Beispiel abgeflacht ist. Zwischen der zylindersymmetrisch ausgebildeten zweiten Gelenkbohrung und dem zweiten Gelenkstift wird durch die Profilierung der gewünschte Freiraum sichergestellt, in den beim Eingießen der Mehrsektoren-Dehnschraube in die Plattenapparatur Füllstoff eintreten kann.

Das Eintreten von fließfähigem Füllstoff wird begünstigt, wenn in den Freiraum eine Querbohrung einmündet.

Bei einer besonders bevorzugten Ausführungsform umfaßt der Grundkörper des zweiten Dehnschraubenteils zwei fluchtend zueinander ausgerichtete Gelenkhülsen, die jeweils eine zweite Gelenkbohrung aufweisen und zwischen sich einen Endbereich des Gelenkstücks aufnehmen. Der Grundkörper des zweiten Dehnschraubenteiles ist somit an dem zugeordneten Endbereich des Gelenkstücks in Längsrichtung der Schwenkachse unverschieblich festgelegt, er kann jedoch um die durch die Längsachse des zweiten Gelenkstifts definierte Schwenkachse relativ zum Gelenkstück geschwenkt werden.

Die nachfolgende Beschreibung bevorzugter Ausführungsformen der Erfindung dient im Zusammenhang mit der Zeichnung der näheren Erläuterung. Es zeigen:
- Figur 1:: eine schaubildliche Darstellung einer ersten Ausführungsform einer erfindungsgemäßen Mehrsektoren-Dehnschraube;
- Figur 2:: eine Seitenansicht der ersten Ausführungsform aus Figur 1;
- Figur 3:: eine schaubildliche Darstellung einer zweiten Ausführungsform einer erfindungsgemäßen Mehrsektoren-Dehnschraube;
- Figur 4:: eine Seitenansicht der zweiten Ausführungsform gemäß Figur 3;
- Figur 5:: eine schaubildliche Darstellung einer dritten Ausführungsform einer erfindungsgemäßen Mehrsektoren-Dehnschraube; und
- Figur 6:: eine Seitenansicht der dritten Ausführungsform gemäß Figur 5.

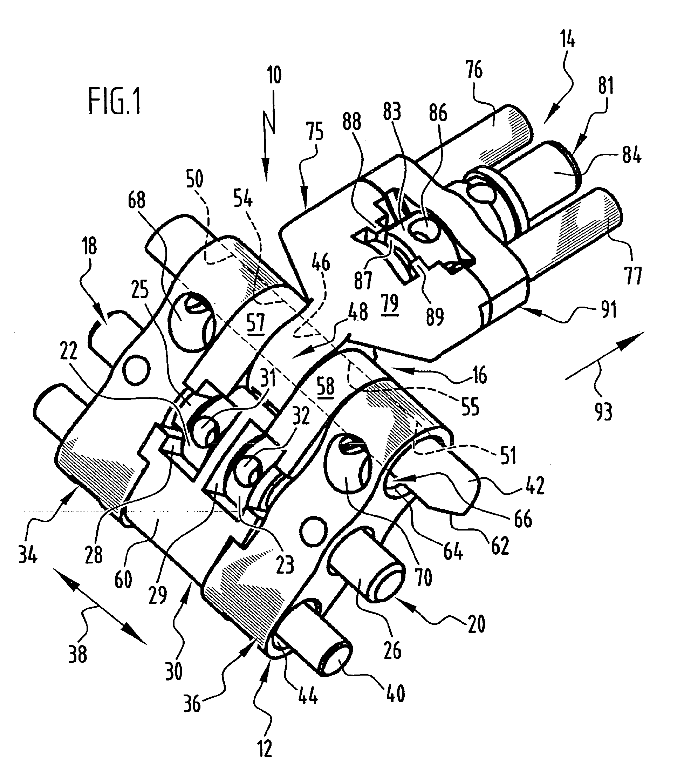

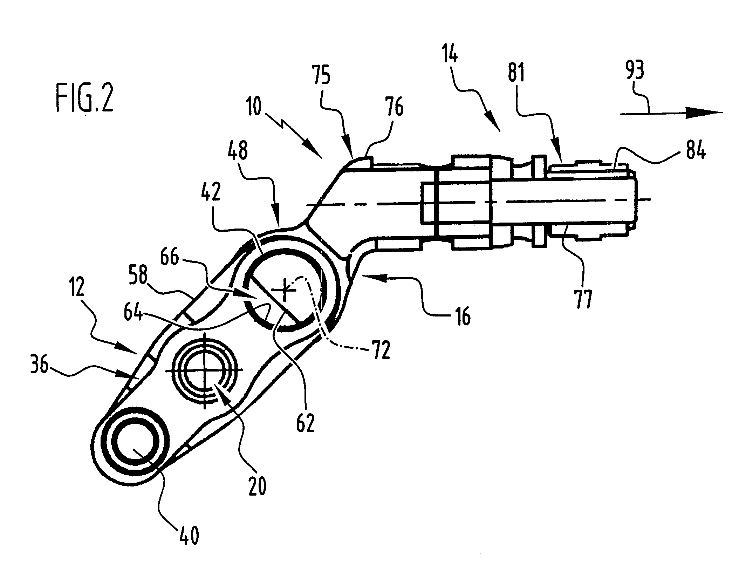

In den Figuren 1 und 2 ist schematisch eine erste Ausführungsform einer erfindungsgemäßen Mehrsektoren-Dehnschraube dargestellt, die insgesamt mit dem Bezugszeichen 10 belegt ist. Sie umfaßt einen ersten Dehnschraubenteil 12 und einen zweiten Dehnschraubenteil 14, die über ein Gelenk 16 mit einander verbunden sind. Die Mehrsektoren-Dehnschraube 10 kommt bei einer an sich bekannten und deshalb in der Zeichnung nicht dargestellten kieferorthopädischen Plattenapparatur zum Einsatz und dient dem Auseinanderschieben von deren Plattenteilen.

Der erste Dehnschraubenteil 12 weist zwei Spindeln 18, 20 auf, die jeweils ein Kopfteil 22 bzw. 23 und ein Spindelteil 25 bzw. 26 umfassen. Die Kopfteile 22 und 23 sind in zugeordneten Ausnehmungen 28 bzw. 29 eines Halteteils 30 drehbar gehalten und weisen über ihren Umfang gleichmäßig verteilt vier radiale Bohrungen zum Ansetzen eines Dorns auf, wobei in Figur 1 jeweils nur eine Bohrung 31 bzw. 32 dargestellt ist.

Die Spindelteile 25 und 26 tragen jeweils ein Außengewinde und durchgreifen eine Gewindebohrung eines Dehnschraubenkörpers 34 bzw. 36, die durch Drehen der jeweiligen Spindeln 18 bzw. 20 in die einander abgewandte Richtung verschoben werden können und nach Einbettung in eine übliche Kunststoffplatte einer kieferorthopädischen Plattenapparatur der transversalen Erweiterung, d. h. Dehnung, des Ober- oder Unterkiefers dienen. Die transversale Dehnrichtung ist in Figur 1 durch den Doppelpfeil 38 veranschaulicht.

Zur Führung der Dehnschraubenkörper 34 und 36 weist der erste Dehnschraubenteil 12 einen Führungsstift 40 sowie einen Gelenkstift 42 auf, die parallel zu den Spindeln 18 und 20 ausgerichtet sind und an denen die Dehnschraubenkörper 34, 36 verschiebbar gehalten sind. Mittels des Führungsstiftes 40 und des ersten Gelenkstiftes 42 ist sichergestellt, daß die Dehnschraubenkörper 34, 36 beim Drehen der jeweils zugeordneten Spindel 18 bzw. 20 lediglich eine Verschiebebewegung, nicht jedoch zusätzlich eine Drehbewegung ausführen.

Der Führungsstift 40 ist in eine durchgehende, in der Zeichnung zur Erzielung einer besseren Übersicht nicht dargestellte Haltebohrung des Halteteiles 30 eingepreßt und durchgreift jeweils eine Führungsbohrung 44 der beiden Dehnschraubenkörper 34, 36.

Der erste Gelenkstift 42 ist in eine durchgehende Aufnahmebohrung 46 eines Gelenkstückes 48 eingepreßt und durchgreift jeweils eine Gelenkbohrung 50 bzw. 51 der Dehnschraubenkörper 34 bzw. 36 sowie fluchtend zu diesen angeordnete Gelenkbohrungen 54, 55 des Halteteiles 30. Letzteres ist U-förmig ausgestaltet und weist zwei Halteteilschenkel 57, 58 auf, die über einen Halteteilsteg 60 miteinander verbunden sind. Die Halteteilschenkel 57 und 58 weisen im Bereich ihrer freien Enden jeweils eine der Gelenkbohrungen 54 bzw. 55 auf, und im Bereich des Halteteilstegs 60 sind die beiden Ausnehmungen 28 und 29 angeordnet, die jeweils ein Kopfteil 22 bzw. 23 der Spindeln 18 bzw. 20 aufnehmen.

Der erste Gelenkstift 42 ist in den Gelenkbohrungen 50, 51 und 54, 55 mit Spiel gehalten und weist im Bereich der Gelenkbohrungen 50, 51, 54, 55 außenseitig eine Profilierung in Form einer Abflachung 62 auf. Dies wird insbesondere aus Figur 2 deutlich. Durch die Abflachung 62 ist im Bereich der Gelenkbohrungen 50, 51 und 54, 55 zwischen dem ersten Gelenkstift 42 und der jeweiligen Bohrungswandung 64 ein Freiraum 66 definiert, in den beim Eingießen des ersten Dehnschraubenteils 12 in die zugeordnete kieferorthopädische Plattenapparatur fließfähiger Füllstoff, z. B. Kunststoff eintreten kann.

In Höhe der Gelenkbohrungen 50 bzw. 51 weisen die Dehnschraubenkörper 34 und 36 jeweils eine durchgehende Querbohrung 68 bzw. 70 auf, die senkrecht zur Längsachse des ersten Gelenkstifts 42 und damit auch senkrecht zur Achse der Querbohrungen 50 und 51 ausgerichtet sind. Die Querbohrungen 68 und 70 münden jeweils in den Freiraum 66 und erleichtern dadurch das Eintreten des Füllstoffs beim Eingießen des ersten Dehnschraubenteils 12 in die zugeordnete kieferorthopädische Plattenapparatur.

Der erste Gelenkstift 42 bildet in Kombination mit dem Gelenkstück 48 das Gelenk 16, mit dessen Hilfe der erste Dehnschraubenteil 12 um die durch die Längsachse des ersten Gelenkstifts 42 definierte Schwenkachse 72 relativ zum zweiten Dehnschraubenteil 14 geschwenkt werden kann.

Der zweite Dehnschraubenteil 14 weist einen im wesentlichen U-förmigen Grundkörper 75 auf mit zwei Grundkörperschenkeln 76, 77 und einem Grundkörpersteg 79, der einstückig mit dem Gelenkstück 48 verbunden ist. Die parallel zueinander ausgerichteten Grundkörperschenkel 76, 77 definieren eine Ebene, zu der das Gelenkstück 48 geneigt ist. Dies wird insbesondere aus Figur 2 deutlich.

Die Grundkörperschenkel 76, 77 nehmen zwischen sich eine Spindel 81 des zweiten Dehnschraubenteils 14 auf, die ein Kopfteil 83 und ein Spindelteil 84 umfaßt. Entsprechend der Kopfteile 22 und 23 der Spindeln 18 und 20 weist auch das Kopfteil 83 der Spindel 81 über seinen Umfang gleichmäßig verteilt vier radiale Bohrungen zum Ansetzen eines Dorns auf, wobei aus der Zeichnung lediglich eine radiale Bohrung 86 erkennbar ist.

Das Kopfteil 83 umfaßt außerdem einen in Umfangsrichtung verlaufenden Einstich 87, in den zur axialen Sicherung der Spindel 81 zwei einander zugewandte Sicherungsrippen 88, 89 eintauchen, die mit den Grundkörperschenkeln 76 bzw. 77 fest verbunden, zum Beispiel verpresst sind.

Das Spindelteil 84 durchgreift eine Gewindebohrung eines Dehnschraubenkörpers 91, der an den Grundkörperschenkeln 76, 77 verschiebbar gehalten ist, d. h. die Grundkörperschenkel 76 und 77 bilden Führungselemente für den Dehnschraubenkörper 91, der durch Drehen der Spindel 81 in die in Figur 2 durch den Pfeil 93 veranschaulichte sagittale Dehnrichtung verschoben werden kann.

Die Mehrsektoren-Dehnschraube 10 kommt bei einer kieferorthopädischen Plattenapparatur zum Einsatz, die insgesamt drei plattenförmige Bauteile aufweist, wobei die Dehnschraubenkörper 34, 36 und 91 jeweils in eines der plattenförmigen Bauteile eingegossen werden können. Vor dem Eingießen kann die Mehrsektoren-Dehnschraube an die individuellen Kieferverhältnisse angepaßt werden durch Schwenken des ersten Dehnschraubenteiles 12 um die Schwenkachse 72 relativ zum zweiten Dehnschraubenteil 14. Nach erfolgter Anpassung kann beim Eingießen der Mehrsektoren-Dehnschraube 10 in die zugeordnete kieferorthopädische Plattenapparatur flüssiger Kunststoff in den Freiraum 66 eintreten und dort aushärten. Dies hat zur Folge, daß eine weitere Schwenkbewegung des ersten Dehnschraubenteiles 12 unterbunden wird, d. h. der erste Dehnschraubenteil 12 kann durch Eingießen von Füllstoff, z.B. Kunststoff, in den Freiraum 66 in der jeweils gewünschten Schwenkstellung relativ zum zweiten Dehnschraubenteil 12 festgelegt werden.

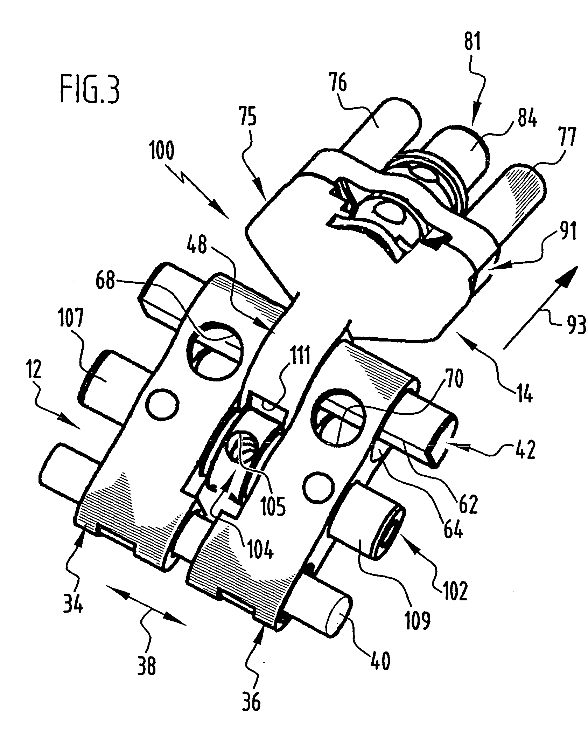

In den Figuren 3 bis 6 sind eine zweite und eine dritte Ausführungsform der erfindungsgemäßen Mehrsektoren-Dehnschraube dargestellt, wobei diese Ausführungsformen weitgehend identisch ausgestaltet sind wie die voranstehend unter Bezugnahme auf die Figuren 1 und 2 dargestellte Mehrsektoren-Dehnschraube 10. Für identische Bauteile werden daher in den Figuren 3 bis 6 dieselben Bezugszeichen verwendet wie in den Figuren 1 und 2. Zur Vermeidung von Wiederholungen wird diesbezüglich auf die voranstehenden Erläuterungen Bezug genommen.

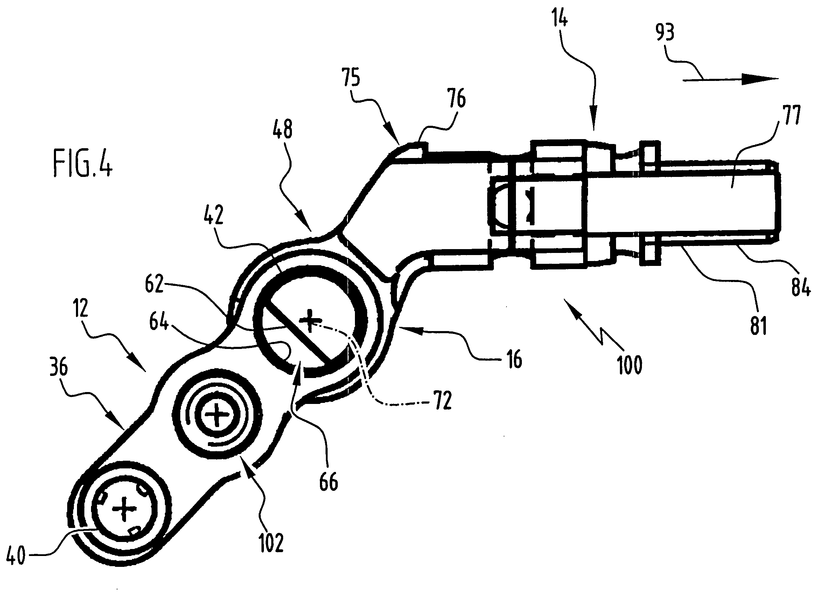

In den Figuren 3 und 4 ist als zweite Ausführungsform eine insgesamt mit dem Bezugszeichen 100 belegte Mehrsektoren-Dehnschraube dargestellt, die sich von der voranstehend erläuterten Mehrsektoren-Dehnschraube 10 zum einen dadurch unterscheidet, daß beim ersten Dehnschraubenteil 12 eine einzige Spindel 102 zum Einsatz kommt mit einem Kopfteil 104, das über seinen Umfang gleichmäßig verteilt vier radiale Bohrungen 105 zum Ansetzen eines Dornes trägt, sowie mit zwei einander abgewandten Spindelteilen 107 und 109, wobei eines der Spindelteile ein Rechtsgewinde und das andere Spindelteil ein Linksgewinde trägt. In entsprechender Weise wie die Spindelteile 25 und 26 der Mehrsektoren-Dehnschraube 10 wirken die Spindelteile 107 und 109 mit den bereits erläuterten Dehnschraubenkörpern 34 bzw. 36 zusammen, d. h. durch Drehen der Spindel 102 können die Dehnschraubenkörper 34 und 36 in transversaler Dehnrichtung 38 verschoben werden.

Die Mehrsektoren-Dehnschraube 100 unterscheidet sich von der Mehrsektoren-Dehnschraube 10 zum anderen dadurch, daß sie kein separates Halteteil für die Spindel 102 aufweist, die axiale Sicherung der Spindel 102 wird vielmehr vom Gelenkstück 48 der Mehrsektoren-Dehnschraube 100 übernommen, das hierzu eine Ausnehmung 111 aufweist, in die das Kopfteil 104 seitlich eintaucht. Die Mehrsektoren-Dehnschraube 100 zeichnet sich somit durch einen besonders einfachen konstruktiven Aufbau aus. Wiederum kann das erste Dehnschraubenteil 12 relativ zum zweiten Dehnschraubenteil 14 um die durch die Längsachse des ersten Gelenkstiftes 42 vorgegebene Schwenkachse 72 geschwenkt werden, so daß die beiden Dehnschraubenteile 12 und 14 in ihrer relativen Ausrichtung an die jeweiligen Kieferverhältnisse angepaßt werden können. Da auch bei der Mehrsektoren-Dehnschraube 100 der erste Gelenkstift 42 im Bereich der Gelenkbohrungen 50 und 51 der Dehnschraubenkörper 34 bzw. 36 abgeflacht ist, so daß sich im Bereich der Gelenkbohrungen 50 und 51 ein Freiraum 66 ausbildet, in den jeweils eine Querbohrung 68 bzw. 70 einmündet, ist auch bei der Mehrsektoren-Dehnschraube 100 sichergestellt, daß nach Anpassung an die individuellen Kieferverhältnisse Füllstoff, z.B. flüssiger Kunststoff, in den Freiraum 66 eintreten kann, um die Dehnschraubenteile 12 und 14 in ihrer relativen Ausrichtung zueinander festzulegen.

Wie aus dem Voranstehenden deutlich wird, kommt sowohl bei der unter Bezugnahme auf die Figuren 1 und 2 beschriebenen Mehrsektoren-Dehnschraube 10 als auch bei der unter Bezugnahme auf die Figuren 3 und 4 erläuterten Mehrsektoren-Dehnschraube 100 jeweils nur ein Gelenk 16 zum Einsatz, das eine einzige Schwenkachse 72 definiert.

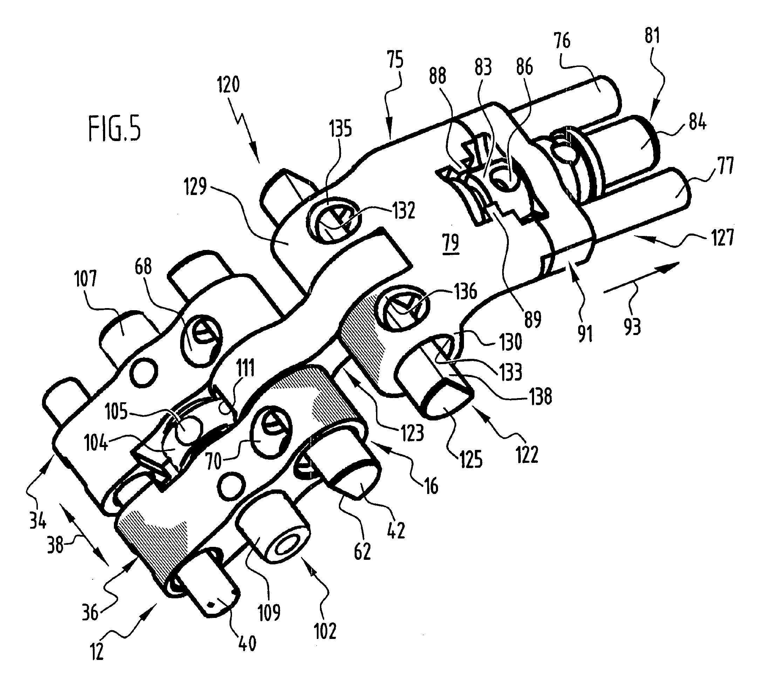

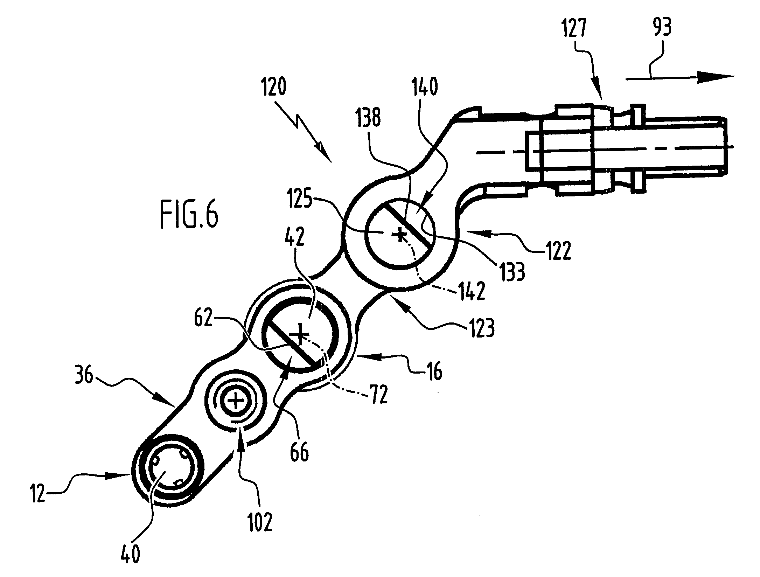

Im Gegensatz hierzu ist in den Figuren 5 und 6 eine dritte Ausführungsform der erfindungsgemäßen Mehrsektoren-Dehnschraube dargestellt, die insgesamt mit dem Bezugszeichen 120 belegt ist und die zusätzlich zum Gelenk 16 ein weiteres Gelenk 122 umfaßt. Hierzu weist sie ein längliches Gelenkstück 123 auf, das an seinen Endbereichen jeweils eine Aufnahmebohrung trägt zur drehfesten Halterung eines Gelenkstiftes. An einem ersten Endbereich ist der voranstehend bereits erläuterte erste Gelenkstift 42 gehalten, der - wie bereits beschreiben - mit dem ersten Dehnschraubenteil 12 zusammenwirkt, und an einem zweiten Endbereich ist ein zweiter Gelenkstift 125 fixiert, der mit einem zweiten Dehnschraubenteil 127 zusammenwirkt.

Der zweite Dehnschraubenteil 127 unterscheidet sich von dem voranstehend erläuterten zweiten Dehnschraubenteil 14 lediglich dadurch, daß statt des Gelenkstiftes 48 an den Grundkörper 75 zwei fluchtend zueinander ausgerichtete Gelenkhülsen 129, 130 angeformt sind, die jeweils eine Gelenkbohrung 132 bzw. 133 aufweisen, die vom zweiten Gelenkstift 125 mit Spiel durchgriffen werden. Zusätzlich umfassen die Gelenkhülsen 129 und 130 jeweils eine Querbohrung 135 bzw. 136, die senkrecht zu den Gelenkbohrungen 132 und 133 ausgerichtet sind. Der zweite Gelenkstift 125 ist identisch ausgestaltet wie der erste Gelenkstift 42, d. h. er trägt im Bereich der Gelenkbohrungen 132 und 133 eine Profilierung in Form einer Abflachung 138, so daß im Bereich der Gelenkbohrungen 132 und 133 jeweils ein Freiraum 140 zwischen dem zweiten Gelenkstift 125 und den jeweiligen Bohrungswandungen definiert ist, wobei die Querbohrungen 135 und 136 in den jeweiligen Freiraum 140 einmünden, so daß beim Eingießen der Mehrsektoren-Dehnschraube 120 in die kieferorthopädische Plattenapparatur Füllstoff, z.B. flüssiger Kunststoff, über die Querbohrungen 135 und 136 und die Gelenkbohrungen 132 und 133 in den Freiraum 140 eindringen und dort aushärten kann, nachdem die beiden Dehnschraubenteile 12 und 127 in ihrer Ausrichtung an die individuellen Kieferverhältnisse angepaßt wurden. Die Mehrsektoren-Dehnschraube 120 ermöglicht hierbei eine besonders gute Anpassung, da mit dem Gelenk 122 zusätzlich zu der bereits erläuterten Schwenkachse 72 eine weitere Schwenkachse 142 bereit gestellt wird, die durch die Längsachse des zweiten Gelenkstifts 125 definiert wird.

## Patentansprüche

1. Mehrsektoren-Dehnschraube für kieferorthopädische Plattenapparaturen zur transversalen und sagittalen Dehnung des Kiefers, mit einem ersten Dehnschraubenteil zur transversalen und einem zweiten Dehnschraubenteil zur sagittalen Kieferdehnung, wobei die beiden Dehnschraubenteile jeweils mindestens ein Führungselement aufweisen, an dem zumindest ein mit einer drehbaren Spindel zusammenwirkender Dehnschraubenkörper verschiebbar geführt ist, **dadurch gekennzeichnet, daß** die beiden Dehnschraubenteile (12, 14; 127) über mindestens ein Gelenk (16; 122) miteinander verbunden sind, wobei der erste Dehnschraubenteil (12) unabhängig von der relativen Lage der Dehnschraubenkörper (34, 36, 91) zueinander um mindestens eine Schwenkachse (72; 142) schwenkbar und in einer eingenommenen Schwenkstellung relativ zum zweiten Dehnschraubenteil (14; 127) festlegbar ist.

2. Mehrsektoren-Dehnschraube nach Anspruch 1, **dadurch gekennzeichnet, daß** die Spindel (18, 20, 81, 102) gegen eine Verschiebung in axialer Richtung gesichert ist.

3. Mehrsektoren-Dehnschraube nach Anspruch 1 oder 2, **dadurch gekennzeichnet, daß** die beiden Dehnschraubenteile (12, 127) über zwei Gelenke (16, 122) miteinander verbunden sind, die jeweils eine Schwenkachse (72, 142) definieren.

4. Mehrsektoren-Dehnschraube nach Anspruch 1, 2 oder 3, **dadurch gekennzeichnet, daß** das mindestens eine Gelenk (16, 122) zumindest eine Öffnung (66, 68, 70, 135, 136, 140) aufweist zur Aufnahme von Füllstoff beim Eingießen der Mehrsektoren-Dehnschraube (10; 100; 120) in die Plattenapparatur.

5. Mehrsektoren-Dehnschraube nach einem der voranstehenden Ansprüche, **dadurch gekennzeichnet, daß** das mindestens eine Gelenk (16) ein Gelenkstück (48; 123) und einen ersten Gelenkstift (42) umfaßt, wobei das Gelenkstück (48; 123) mit dem zweiten Dehnschraubenteil (14; 127) verbunden ist und der mindestens eine Dehnschraubenkörper (34, 36) des ersten Dehnschraubenteils (12) verschiebbar am ersten Gelenkstift (42) gehalten ist, und wobei der Dehnschraubenkörper (34, 36) und/oder das Gelenkstück (48; 123) eine erste Gelenkbohrung (50, 51) aufweisen, die vom ersten Gelenkstift (42) durchgriffen ist, wobei der erste Gelenkstift (42) in der ersten Gelenkbohrung (50, 51) um seine Längsachse drehbar ist und im Bereich der ersten Gelenkbohrung (50, 51) zwischen deren Wandung (64) und dem ersten Gelenkstift (42) ein Freiraum (66) vorgesehen ist zur Aufnahme von Füllstoff beim Eingießen der Mehrsektoren-Dehnschraube (10; 100; 120) in die Plattenapparatur.

6. Mehrsektoren-Dehnschraube nach Anspruch 5, **dadurch gekennzeichnet, daß** der erste Gelenkstift (42) drehfest in einer Aufnahmebohrung (46) des Gelenkstücks (48; 123) gehalten ist und der mindestens eine Dehnschraubenkörper (34, 36) die erste Gelenkbohrung (50, 51) aufweist und verschwenkbar am Gelenkstift (42) gehalten ist.

7. Mehrsektoren-Dehnschraube nach Anspruch 5 oder 6, **dadurch gekennzeichnet, daß** der erste Gelenkstift (42) zumindest im Bereich der ersten Gelenkbohrung (50, 51) seitlich profiliert ist.

8. Mehrsektoren-Dehnschraube nach einem der Ansprüche 5 bis 7, **dadurch gekennzeichnet, daß** der erste Dehnschraubenteil (12) zwei Dehnschraubenkörper (34, 36) aufweist, die im Abstand zueinander am ersten Gelenkstift (42) gehalten sind, wobei das Gelenkstück (48; 123) zwischen den beiden Dehnschraubenkörpern (34, 36) angeordnet ist.

9. Mehrsektoren-Dehnschraube nach einem der Ansprüche 5 bis 8, **dadurch gekennzeichnet, daß** die mindestens eine Spindel (102) des ersten Dehnschraubenteils (12) in axialer Richtung unverschieblich am Gelenkstück (48; 123) gehalten ist.

10. Mehrsektoren-Dehnschraube nach einem der Ansprüche 5 bis 9, **dadurch gekennzeichnet, daß** der erste Dehnschraubenteil (12) ein Halteteil (30) aufweist, das relativ zum Gelenkstück (48; 123) unverschiebbar, jedoch um die Schwenkachse (72) schwenkbar gehalten ist und an dem die mindestens eine Spindel (18, 20) des ersten Dehnschraubenteils (12) in axialer Richtung unverschieblich gehalten ist.

11. Mehrsektoren-Dehnschraube nach Anspruch 10, **dadurch gekennzeichnet, daß** das Halteteil (30) eine Aufnahme umfaßt, in die das Gelenkstück (48) eintaucht.

12. Mehrsektoren-Dehnschraube nach Anspruch 11, **dadurch gekennzeichnet, daß** das Halteteil (30) im wesentlichen U-förmig ausgestaltet ist und zwei Schenkel (57, 58) umfasst, die im Bereich ihrer freien Enden jeweils eine Gelenkbohrung (54, 55) aufweisen, die fluchtend zueinander und fluchtend zu den Gelenkbohrungen (50, 51) der Dehnschraubenkörper (34, 36) des ersten Dehnschraubenteils (12) ausgerichtet sind, wobei der erste Gelenkstift (42) die Gelenkbohrungen (50, 51, 54, 55) der Schenkel (57, 58) und der Dehnschraubenkörper (34, 36) durchgreift und drehfest in einer fluchtend zu den Gelenkbohrungen (50, 51, 54, 55) ausgerichteten Aufnahmebohrung (46) des Gelenkstückes (48; 123) gehalten ist.

13. Mehrsektoren-Dehnschraube nach einem der Ansprüche 5 bis 16, **dadurch gekennzeichnet, daß** das Gelenkstück (48) starr am zweiten Dehnschraubenteil (14) gehalten ist.

14. Mehrsektoren-Dehnschraube nach einem der Ansprüche 5 bis 12, **dadurch gekennzeichnet, daß** das Gelenkstück (123) verschwenkbar am zweiten Dehnschraubenteil (127) gehalten ist.

15. Mehrsektoren-Dehnschraube nach Anspruch 14, **dadurch gekennzeichnet, daß** das Gelenkstück (123) über einen zweiten Gelenkstift (125) mit dem Grundkörper (75) des zweiten Dehnschraubenteils (127) verbunden ist, wobei das Gelenkstück (123) und/oder der Grundkörper (75) eine zweite Gelenkbohrung (132, 133) aufweisen, die vom zweiten Gelenkstift (125) durchgriffen ist, und wobei der zweite Gelenkstift (125) in der zweiten Gelenkbohrung (132, 133) um seine Längsachse drehbar ist und im Bereich der zweiten Gelenkbohrung (132, 133) zwischen deren Wandung und dem zweiten Gelenkstift (125) ein Freiraum (140) vorgesehen ist zur Aufnahme von Füllstoff beim Eingießen der Mehrsektoren-Dehnschraube (120) in die Plattenapparatur.

16. Mehrsektoren-Dehnschraube nach Anspruch 15, **dadurch gekennzeichnet, daß** der zweite Gelenkstift (125) drehfest in einer zweiten Aufnahmebohrung des Gelenkstücks (123) gehalten ist, und daß der Grundkörper (75) des zweiten Dehnschraubenteils (127) zumindest eine zweite Gelenkbohrung (132, 133) aufweist und schwenkbar am zweiten Gelenkstift (125) gehalten ist.

17. Mehrsektoren-Dehnschraube nach Anspruch 15 oder 16, **dadurch gekennzeichnet, daß** der zweite Gelenkstift (125) zumindest im Bereich der zweiten Gelenkbohrung (132, 133) seitlich profiliert ist.

18. Mehrsektoren-Dehnschraube nach einem der Ansprüche 15, 16 oder 17, **dadurch gekennzeichnet, daß** der Grundkörper (75) des zweiten Dehnschraubenteils (14) zwei fluchtend zueinander ausgerichtete Gelenkhülsen (129, 130) aufweist, die jeweils eine zweite Gelenkbohrung (135, 136) umfassen und zwischen sich einen Endbereich des Gelenkstücks (123) aufnehmen.
